(19) Europäisches Patentamt
European Patent Office
Office européen des brevets

(11) **EP 1 398 343 B1**

(12) # EUROPÄISCHE PATENTSCHRIFT

(45) Veröffentlichungstag und Bekanntmachung des Hinweises auf die Patenterteilung:
**26.01.2005 Patentblatt 2005/04**

(51) Int Cl.7: **C08J 3/24**, C08J 3/09, C08K 5/00

(21) Anmeldenummer: **03018674.6**

(22) Anmeldetag: **21.08.2003**

(54) **Siliconölpasten**

Silicone pastes

Polysiloxanes pâteuses

(84) Benannte Vertragsstaaten:
**BE DE FR GB NL**

(30) Priorität: **05.09.2002 DE 10241148**

(43) Veröffentlichungstag der Anmeldung:
**17.03.2004 Patentblatt 2004/12**

(73) Patentinhaber: **Wacker-Chemie GmbH**
**81737 München (DE)**

(72) Erfinder:
- **Herzig, Christian Dr.**
  **83329 Feichten (DE)**
- **Dormeier, Siegfried**
  **94166 Stubenberg (DE)**

(74) Vertreter: **Deffner-Lehner, Maria, Dr. et al**
**Wacker-Chemie GmbH,**
**Zentralabteilung PLM,**
**Hanns-Seidel-Platz 4**
**81737 München (DE)**

(56) Entgegenhaltungen:
**EP-A- 0 870 793**
**DE-A- 10 046 024**
**US-A- 4 493 926**
**US-B1- 6 353 076**
**WO-A-96/34030**
**FR-A- 2 708 272**
**US-A1- 2002 086 952**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 398 343 B1

Printed by Jouve, 75001 PARIS (FR)

## Beschreibung

Die Erfindung betrifft Pasten, die Siliconöle enthalten.

In WO 97/40103 werden Gemische aus Siliconölen mit Silicon-Harnstoff-Copolymeren beschrieben, zu denen bis zu 30 % Silicatharze zugesetzt werden. Das Copolymer ist, alternierend aus Diorganosiloxan- und Oligoharnstoffblöcken, aufgebaut. Die Mischungen bilden thixotrope Massen, die als Kleb- und Dichtstoffe verwendet werden können.

Polyurethane und Polyurethanharnstoffe, die bis zu 30 Gew.-% Siliconharze enthalten, werden in EP-A 193 808 beschrieben. Die Formulierungen bilden mehrphasige Gemische, die zur Beschichtung von Leder und Textilien verwendet werden.

In US 6,353,076 B1 wird ein Polyamid auf Siloxanbasis als Geliermittel in kosmetischen Zusammensetzungen beschrieben. Das Polyamid auf Siloxanbasis ist ein Feststoff und wird als Verdicker für flüssige Silicone in kosmetischen Zusammensetzungen, insbesondere in schweißhemmenden Mitteln und Deodorant, verwendet.

US 2002/086952 Al offenbart ein Elastomer, das Carboxylgruppen aufweist, und das mit einer Verbindung z. B. Nylon, das als Vernetzungsmittel agiert, unter Ausbildung von Wasserstoffbrückenbindungen vernetzt wird.

WO 96/34030 A beschreibt die Herstellung von Polydiorganosiloxan-Harnstoff-Copolymeren und deren Mischungen.

Gegenstand der Erfindung sind
Pasten enthaltend

(1) Siloxancopolymere, die pro Molekül mindestens zwei Gruppen der allgemeinen Formel

$$-C(O)NR^1-$$

kovalent gebunden enthalten, wobei $R^1$ ein Wasserstoffatom oder einen Alkylrest mit 1 bis 18 Kohlenstoffatomen, vorzugsweise ein Wasserstoffatom bedeutet und
(2) organische Verbindungen die bei 25°C fest sind und ein Molekulargewicht (Mn) von bis zu 1000 Dalton aufweisen, und die in den Siloxancopolymeren (1) dispergiert sind und pro Molekül mindestens eine Gruppe enthalten, die zur Ausbildung von Wasserstoffbrücken mit den $-C(O)NR^1$-Gruppen in (1) als Donor und/oder Akzeptor wirkt.

Die Siloxancopolymeren (1) sind bei Raumtemperatur (25°C) flüssig und weisen eine Viskosität von vorzugsweise 0,2 Pa·s bis 500 Pa·s bei 25°C, bevorzugt 1 Pa·s bis 50 Pa·s bei 25°C, auf und
besitzen ein Molekulargewicht ($M_n$) von 500 bis 5 000 000 Dalton, vorzugsweise 1 000 bis 1 000 000 Dalton, bevorzugt 5 000 bis 100 000 Dalton.

Die organischen Verbindungen (2) sind vorzugsweise bei Raumtemperatur (25°C) fest und weisen einen Schmelzpunkt von vorzugsweise mindestens 30°C, bevorzugt mindestens 50°C, auf.

Die Gemische aus Siloxancopolymeren (1) und organischen Verbindungen (2) sind dadurch charakterisiert, dass sie oberhalb eines bestimmten Temperaturbereiches - der über 0°C liegt - homogene Ölphasen mit einer Viskosität von vorzugsweise 0,2 Pa·s bis 500 000 Pa·s bei 25°C, bevorzugt 1 Pa·s bis 500 Pa·s bei 25°C, bilden und unterhalb dieses Temperaturbereiches als pastöse Massen vorliegen, in denen die organischen Verbindungen (2) als Feststoffe in den Siloxancopolymeren (1) dispergiert sind.

In den erfindungsgemäßen Pasten wirken die organischen Verbindungen (2) gegenüber den Siloxancopolymeren (1) als physikalische Vernetzer. Durch die Ausbildung von vielen schwachen Wasserstoffbrücken zwischen Siloxancopolymeren (1) und organischen Verbindungen (2) entsteht ein physikalisches Netzwerk. Über Erwärmung lassen sich diese Strukturen reversibel zerstören, d.h. die Siliconcopolymere (1) lassen sich auf einfache Weise thermisch reversibel vernetzen.

Gegenstand der Erfindung ist weiterhin ein Verfahren zur Herstellung der erfindungsgemäßen Pasten, indem eine Mischung enthaltend

(1) Siloxancopolymere, die pro Molekül mindestens zwei Gruppen der allgemeinen Formel

$$-C(O)NR^1-$$

kovalent gebunden enthalten, bei 25°C flüssig sind und ein Molekulargewicht ($M_n$) von 500 bis 5 000 000 Dalton aufweisen,
wobei $R^1$ ein Wasserstoffatom oder einen Alkylrest mit 1 bis 18 Kohlenstoffatomen bedeutet und
(2) organische Verbindungen, die bei 25°C fest sind und ein Molekulargewicht ($M_n$) von bis zu 1 000 Dalton aufweisen und die pro Molekül mindestens eine Gruppe enthalten, die zur Ausbildung von Wasserstoffbrücken mit den -C(O)$NR^1$-Gruppen in den Siloxancopolymeren (1) als Donor und/oder Akzeptor wirkt,

so hoch erwärmt wird, bis ein homogenes Öl erhalten wird, und das so erhaltene Öl anschließend so tief abgekühlt wird, bis eine Paste erhalten wird.

Die organischen Verbindungen (2) sind in den erfindungsgemäßen Pasten in Mengen von vorzugsweise 0,02 bis 20 Gew.-%, bevorzugt 0,5 bis 3 Gew.-%, bezogen auf das Gesamtgewicht von Siloxancopolymeren (1) und organischen Verbindungen (2). Hauptkomponente ist also das Siloxancopolymer (1).

Die Siloxansegmente bzw. Siloxanblöcke in den Siloxancopolymeren (1) enthalten vorzugsweise Siloxaneinheiten der allgemeinen Formel

$$R_aSiO_{\frac{4-a}{2}},$$

wobei R einen einwertigen Kohlenwasserstoffrest mit 1 bis 18 Kohlenstoffatomen je Rest bedeutet und
a 0, 1, 2 oder 3, vorzugsweise 2 ist.
Das Siloxancopolymer (1) enthält vorzugsweise mindestens 50 Gew.-% Diorganosiloxaneinheiten, bevorzugt mindestens 90 Gew.-% Diorganosiloxaneinheiten.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.

Beispiele für Alkylreste $R^1$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, und Hexylreste, wie der n-Hexylrest.

Die Siloxancopolymeren (1) können die -C(O)$NR^1$-Gruppen in beliebiger Folge und Anordnung enthalten. Die -C(O)$NR^1$-Gruppen sind vorzugsweise über Si-C-Bindungen an die Siloxansegmente gebunden. Die -C(O)$NR^1$-Gruppen können vereinzelt, blockweise oder in Serie sowohl entlang der Hauptkette als auch in Seitenketten vorhanden sein. Die Siloxancopolymere (1) können lineare, verzweigte oder cyclische Strukturen oder auch Mischungen solcher Strukturen aufweisen.

Die -C(O)$NR^1$-Gruppen sind vorzugsweise nicht direkt an Siliciumatome gebunden. Sie können beidseitig an C-Atome gebunden sein, wodurch sie die Bedeutung von Amidgruppen C-C(O)$NR^1$-C bekommen. In einer weiteren erfindungsgemäßen Ausführung können die -C(O)$NR^1$-Gruppen an einer Seite auch an Heteroatome gebunden sein, wodurch sich folgende Strukturtypen ergeben:

| | |
|---|---|
| O-C(O)$NR^1$-C | Urethan |
| N-C(O)$NR^1$-C | Harnstoff |
| O-C(O)$NR^1$-C(O)$NR^1$-C | Allophan |
| $NR^1$-C(O)$NR^1$-C(O)$NR^1$-C | Biuret |

und höhere Kondensate.

Solche komplexeren Formen von - C(O)$NR^1$-Gruppen können linear aufgebaut oder Teil einer Verzweigung und/oder eines Ringsystems sein. Sie sind als Beispiele zu werten und stellen keine Begrenzung des Umfangs der Erfindung dar.

Die Siloxancopolymere (1) können eine Art von - C(O)$NR^1$-Gruppen oder mehrere Arten davon enthalten. So können z. B. gleichzeitig Urethan- und Harnstoffgruppen vorhanden sein.

Im Minimum enthalten Siloxancopolymere (1) einen Siloxanblock, wie z. B. bei einem linearen Polysiloxan, das an den Kettenenden monofunktionelle Gruppen aufweist, die jeweils mindestens eine - C(O)$NR^1$-Gruppe enthalten. Bevorzugt sind allerdings Siloxancopolymere (1), die diese Gruppen mehrmals im durchschnittlichen Molekül enthalten.

Beispiele für Siloxancopolymere (1) und deren Herstellung sind beschrieben in:

EP-B 250 248

WO 1996/034030
EP-B 822 950
US-A 5 221 724
US-A 5 001 210
US-A 6 166 093.

Beispielsweise werden die Siloxancopolymere (1) hergestellt durch Umsetzung eines endständige Si-C gebundene Hydroxyl- oder Amino-Gruppen aufweisenden Polyorganosiloxans, bevorzugt eines endständige Si-C gebundene Hydroxyl- oder Amino-Gruppen aufweisenden, linearen Polydiorganosiloxans, mit Mono-, Dioder Triisocyanaten, bevorzugt Diisocyanaten. Hierbei werden Urethan-Siloxan-Copolymere oder Harnstoff-Siloxan-Copolymere erhalten.

Bevorzugt sind daher als Siloxancopolymere (1) solche, die Struktureinheiten der allgemeinen Formel

$$-SiR_2O(SiR_2O)_n[OR_2Si-R^3-O-C(O)-NH-R^2-NH-C(O)-O-R^3-SiR_2O(SiR_2O)_n]_xOR_2Si-$$

oder

$$-SiR_2O(SiR_2O)_n[OR_2Si-R^3-NH-C(O)-NH-R^2-NH-C(O)-NH-R^3-SiR_2O(SiR_2O)_n]_xOR_2Si-$$

wobei R die oben dafür angegebene Bedeutung hat,
wobei $R^2$ einen zweiwertigen Kohlenwasserstoffrest, vorzugsweise einen Alkylenrest, mit 2 bis 36 Kohlenstoffatomen bedeutet,
$R^3$ einen zweiwertigen Kohlenwasserstoffrest, der ein oder mehrere Heteroatome, wie ein oder mehrere voneinander separate Sauerstoffatome oder Stickstoffatome enthalten kann, bevorzugt einen Alkylenrest mit 1 bis 12 Kohlenstoffatomen bedeutet,
n 0 oder eine ganze Zahl von 1 bis 1 000 ist und
x 0 oder eine ganze Zahl von 1 bis 100 ist,
enthalten.

Werden beispielsweise bei der Herstellung der Siloxancopolymer (1) die Mono-, Di- oder Triisocyanate im stöchiometrischen Unterschuss eingesetzt, enthalten die Siloxancopolymere (1) vorzugsweise als Endgruppen Siloxaneinheiten mit Si-C gebundenen Hydroxyl- oder Amino-Gruppen, bevorzugt solche der Formel

$$-R^3-OH \text{ oder } -R^3-NH_2,$$

wobei $R^3$ die oben dafür angegebene Bedeutung hat.

Werden beispielsweise bei der Herstellung der Siloxancopolymer (1) die Mono-, Di- oder Triisocyanate im stöchiometrischen Überschuss eingesetzt, enthalten die Siloxancopolymere (1) vorzugsweise als Endgruppen Siloxaneinheiten mit Si-C gebundenen Isocyanato-Gruppen, bevorzugt solche der Formel

$$-R^3-O-C(O)-NH-R^2-N=C=O \text{ oder } -R^3-NH-C(O)-NH-R^2-N=C=O\ ,$$

wobei $R^2$ und $R^3$ die oben dafür angegebene Bedeutung haben.

Bevorzugt sind daher die $-C(O)NR^1$-Gruppen in Struktureinheiten der allgemeinen Formel

$$-O-C(O)-NH-R^2-NH-C(O)-O- \text{ oder } -NH-C(O)-NH-R^2-NH-C(O)-NH-$$

und/oder

$$-R^3-O-C(O)-NH-R^2-N=C=O \text{ oder } -R^3-NH-C(O)-NH-R^2-N=C=O$$

wobei $R^2$ die oben dafür angegebene Bedeutung hat,
enthalten.

Beispiele für Reste $R^2$ sind

$-(CH_2)_2-$ ,

$-(CH_2)_4-$ ,

$-(CH_2)_6-$ ,

$-(CH_2)_8-$ ,

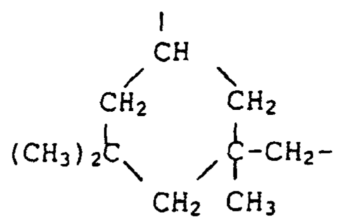

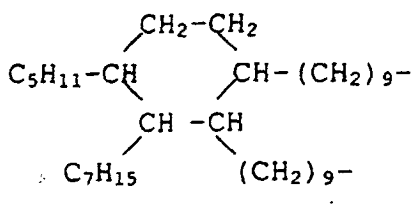

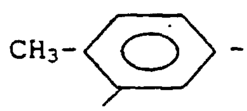

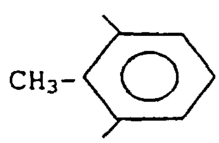

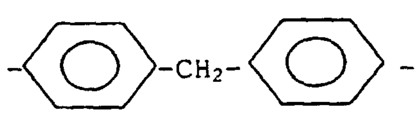

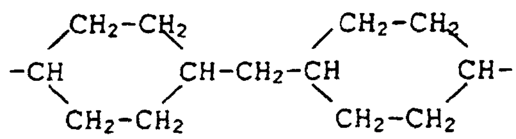

Beispiele für Reste $R^3$ sind
$-CH_2-$ , $-(CH_2)_2-$ , $-(CH_2)_3-$ ,
$-CH(CH_3)CH_2-$ , $-(CH_2)_2C(CH_3)_2-$ ,
$-(CH_2)_3O(CH_2)_2-$ , $-(CH_2)_3O(C_2H_4O)_4-$ , $-(CH_2)_3O(C_3H_6O)_{10}-$ ,
$-(CH_2)_3O(C_2H_4O)_{20}(C_3H_6O)_{10}-$, $-(CH_2)_3NHCO_2(CH_2)_2O-$.

Die erfindungsgemäßen Pasten können eine Art der Siloxancopolymeren (1) oder verschiedene Arten der Siloxancopolymeren (1) enthalten.

Die Verbindungen (2) sind bevorzugt organische Moleküle mit wesentlich kleinerer Molmasse als die der Siloxancopolymere (1). Sie sind bevorzugt diskrete Verbindungen, die gut kristallisieren und pro Molekül 1 bis 8 aktive Zentren, bevorzugt 1 bis 4, besonders bevorzugt 1 oder 2, enthalten. Aktive Zentren im Hinblick auf vorliegende Erfindung sind allgemein solche Substrukturen, die befähigt sind, Wasserstoffbrücken auszubilden, indem sie entweder als Akzeptor (2a) oder als Donor (2b) fungieren oder gleichzeitig als Donor und Akzeptor (2c).

Als Akzeptorgruppen (2a) wirken bevorzugt solche, die Atome mit freien verfügbaren Elektronenpaaren enthalten.
Beispiele hierfür sind:

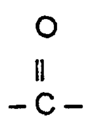 , 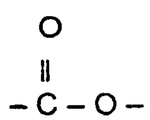 , 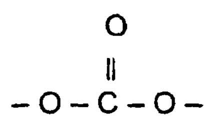 , 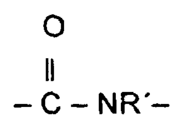 , 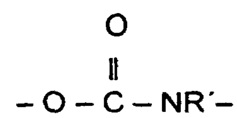 ,

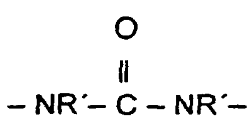 , 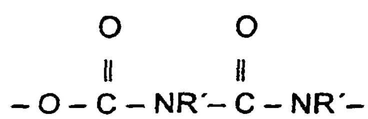 , 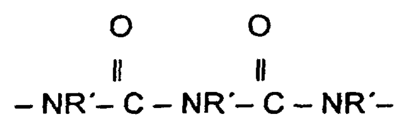 ,

-O-, -NR'-.
wobei R' ein Alkylrest mit 1 bis 18 Kohlenstoffatomen ist.

Als Donorgruppen (2b) wirken solche, die an Heteroatome gebundenen Wasserstoff enthalten, wie N-H, O-H oder S-H. Beispiele sind daher primäre und sekundäre Amine, Alkohole, Phenole oder Mercaptane.

Besonders bevorzugt sind Kombinationen von Akzeptor- und Donorgruppen (2c).
Beispiele hierfür sind:

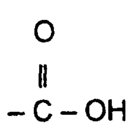 , 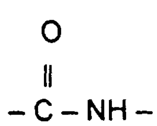 , 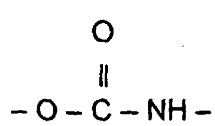 , 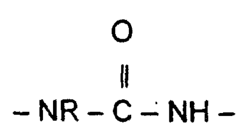 , 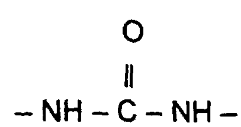

$$-O-\overset{O}{\overset{\|}{C}}-NH-\overset{O}{\overset{\|}{C}}-NH-\ ,\quad -NR-\overset{O}{\overset{\|}{C}}-NH-\overset{O}{\overset{\|}{C}}-NH-\ ,\quad -NH-\overset{O}{\overset{\|}{C}}-NH-\overset{O}{\overset{\|}{C}}-NH-$$

Verbindungen (2) mit Schmelzpunkten unter 0°C ergeben über 0°C keine Pasten, sondern nur fließfähige viskose Öle. Damit Pasten entstehen, muss der Schmelzpunkt der Verbindungen (2) über dem Temperaturbereich liegen, in dem die Mischung, die (1) und (2) enthält, in pastöser Form vorliegen soll. Aus praktischen Gründen ist eine Temperaturdifferenz von vorzugsweise mehr als 5°C, bevorzugt mehr als 10°C, vorteilhaft.

Soll beispielsweise eine erfindungsgemäße Mischung aus (1) und (2), die in der Wärme als homogenes Öl vorliegt, unterhalb 50°C als Paste existieren, ist es vorteilhaft, wenn der Schmelzpunkt der Verbindung (2) bei mindestens 60°C oder höher liegt.

Die Verbindungen (2) haben ein Molekulargewicht ($M_n$) von bis zu 1 000 Dalton, bevorzugt von bis zu 500 Dalton.

Beispiele für bevorzugte Verbindungen (2) sind Diurethane, beispielsweise Umsetzungsprodukte von Hexamethylen-1,6-diisocyanat mit Alkoholen, wie Methanol (105°C), Ethanol (75°C), n-Butanol (90°C), n-Amylalkohol (92°C), n-Hexanol (95°C) und n-Dodecanol (113°C), wie auch Diharnstoffe, beispielsweise Umsetzungsprodukte von Hexamethylen-1,6-diisocyanat mit Aminen wie n-Octylamin (180°C) und tert. Octylamin (75°C). In Klammern sind jeweils die Schmelzpunkte der entsprechenden Verbindung (2) angegeben.

Weitere bevorzugte Verbindungen (2) sind weitere Diurethane, beispielsweise Umsetzungsprodukte von Stearylisocyanat mit Diolen wie 1,3-Propandiol (105°C), 1,3-Butandiol (86°C) oder 1,4 Butandiol (114°C) sowie auch weitere Diharnstoffe, beispielsweise Umsetzungsprodukte von Stearylisocyanat mit Diaminen, wie 1,3-Diaminoneopentan (77°C). In Klammern sind jeweils die Schmelzpunkte der entsprechenden Verbindung (2) angegeben.

Überraschenderweise erhält man auch mit Verbindungen (2) Pasten, wenn sie nur ein aktives Zentrum pro Molekül enthalten. Diese Stoffe sollten zur Ausbildung physikalischer Netzwerke eigentlich nicht geeignet sein: N-Stearylharnstoff (hergestellt aus Stearylisocyanat und Ammonik) mit Schmelzpunkt 101°C ist ein Beispiel dafür.

Die erfindungsgemäßen Pasten können eine Art der Verbindungen (2) oder verschiedene Arten der Verbindungen (2) enthalten.

Eine besonders einfache Art der Herstellung der erfindungsgemäßen Pasten ist der Zusatz von Verbindung (2) zum erwärmten Siloxancopolymer (1), wobei die Temperatur des erwärmten Siloxancopolymers (1) über dem Schmelzpunkt der Verbindung (2) liegt, so dass eine homogene "Lösung" von (2) in (1) entsteht. Die erfindungsgemäßen Pasten werden dann beim Abkühlen erhalten.

Vorzugsweise wird die Mischung aus Siloxancopolymer (1) und Verbindung (2) auf 50°C bis 200°C erwärmt, bevorzugt auf 80°C bis 200°C.

Die erfindungsgemäßen Pasten werden beim Abkühlen der Massen auf vorzugsweise weniger als 40°C, bevorzugt weniger als 60°C, erhalten.

Die erfindungsgemäßen Pasten sind vorzugsweise bei 25°C standfest.

Die Paste ist dann standfest, wenn die Paste auf einen vertikalen flächigen Träger in einer Auftragsstärke von 1 mm mittels einer Rakel, eines Pinsels oder durch Spritzen aufgebracht wird und diese Paste nach der Applikation nicht mehr als 0,1 cm nach unten abläuft.

Eine andere Art der Ausführung ist die Erzeugung von Verbindungen (2) während oder direkt nach der Herstellung der Siloxancopolymere (1).

Die organische Verbindung (2) wird dabei in situ in Gegenwart des erwärmten Siloxancopolymers (1) gebildet, wobei die Temperatur des erwärmten Siloxancopolymers (1) über dem Schmelzpunkt der in situ gebildeten organischen Verbindung (2) liegt, und das erhaltene homogene Öl anschließend abgekühlt wird, wobei eine Paste erhalten wird.

Werden die Siloxancopolymere (1) z. B. aus $\alpha,\omega$-Di(aminopropyl)polydimethylsiloxan mit einem Diisocyanat im Überschuss hergestellt, so kann der Überschuss des Diisocyanats dazu verwendet werden, um Verbindung (2) in situ durch Zugabe von Alkohol oder Amin zu erzeugen. Es ist aber auch möglich, sämtliche Komponenten, die zur Herstellung von (1) und (2) benötigt werden, miteinander zu mischen und umzusetzen. Vorteilhaft führt man die Reaktion bei erhöhter Temperatur zu Ende, vorzugsweise bei einer Temperatur von 40°C bis 140°C, bevorzugt bei einer Temperatur von 70°C bis 120°C.

Die Herstellung der Pasten erfolgt üblicherweise unverdünnt, so dass sie beim Abkühlen direkt entstehen. Hohe Polymerviskositäten können es aber erfordern, dass organische Lösungsmittel verwendet werden müssen, um den Herstellprozess durchführen zu können. Geeignete organische Lösungsmittel sind insbesondere Alkohole, Ester und Ketone, also kleine Moleküle, die als Donor oder Akzeptor nur genau zu einer Wasserstoffbrücke befähigt sind. Stoffe, die zwei oder mehrere Wasserstoffbrücken ausbilden können, sind prinzipiell auch geeignet, sind aber nicht so

effizient, um die Systemviskosität zu reduzieren.
Diese Lösungsmittel können in beliebiger Menge verwendet werden. Die erfindungsgemäßen Pasten können daher organische Lösungsmittel in Mengen von vorzugsweise 0,01 bis 20 Gew.-%, bezogen auf das Gesamtgewicht an Siloxancopolymer (1) und Verbindung (2), enthalten.

Die Lösungsmittel können in den Massen belassen oder auch wieder entfernt werden. Vor allem Alkohole führen bisweilen zum Ausbleiben pastöser Strukturen, die jedoch nach Verdunstung wieder hervorgerufen werden.

Die erfindungsgemäßen Pasten können zur Hydrophobierung von polaren und nicht-polaren Oberflächen verwendet werden. Sie können zur Pflege von Leder, Kunstleder und anderen Kunststoffüberzügen eingesetzt werden und zeigen auf den meisten Substraten gutes Spreit- und Haftverhalten.

Die erfindungsgemäßen Pasten sind geeignet zur Herstellung von Cremes im Kosmetik- und Hygienebereich, die auch mehr oder weniger große Mengen Wasser enthalten können.

Beispiel 1

2 000 g eines $\alpha,\omega$-Bis(3,3-dimethyl-3-hydroxypropyl)-polydimethylsiloxans mit einem Polymerisationsgrad von 50 Siloxyeinheiten pro durchschnittlicher Kette (1 049 mequ. tert. OH) werden mit 75 g Hexamethylen-1,6-diisocyanat (HDI) gemischt und durch Zugabe von 40 mg Dibutylzinndilaurat (DBTL) und 2,1 g Diazabicyclooctan katalysiert. Bei 130°C steigt die Viskosität des Gemisches innerhalb von 5 Stunden von 85 auf 5 270 $mm^2/s$ bei 25°C. Man erhält ein OH-terminiertes Siloxan-Urethansegmentiertes Copolymer mit einer mittleren Molmasse von $M_n$=26.300 Dalton und ca. 12 Urethan-gruppen pro durchschnittlichem Molekül. Das Polymer ist klar, frei fließfähig und enthält kein Isocyanat.

Beispiel 2

In das in Beispiel 1 erhaltene Siloxancopolymer werden bei 110°C 2 Gew.-% eines Diurethans (Schmelzpunkt 105°C), hergestellt aus Stearylisocyanat und 1,3-Propandiol im Molverhältnis 2 : 1, klar gelöst. Beim Abkühlen erstarrt die Mischung bei 95°C zu einer weißlichen Paste, die bei 25°C standfest ist.

Beispiel 3

Das Beispiel 2 wird mit 2 Gew.-% eines Diurethans (Schmelzpunkt 90°C), hergestellt aus Hexamethylendiisocyanat und n-Butanol im Molverhältnis 1 : 2, wiederholt. Beim Abkühlen erfolgt der Übergang von der klaren, homogenen Ölphase zur weißlichen, standfesten Paste bei ca. 70°C. Durch Verdoppelung der Diurethanmenge auf 4 Gew.-% wird dieser Übergang auf ca. 80°C verschoben: es entsteht eine steifere Paste. Durch Halbierung des Diurethanzusatzes auf 1 Gew.-% bildet sich beim Abkühlen ab ca. 60°C eine sehr weiche Paste, die gerade noch standfest ist.

Beispiel 4

Aus Hexamethylendiisocyanat und tert. Octylamin im Molverhältnis 1 : 2 erhält man einen Diharnstoff mit einem Schmelzpunkt von 75°C. Löst man 1 Gew.-% dieser Verbindung bei 100°C im Siloxan-Urethan-Copolymer (Beispiel 1) und kühlt das klare Öl ab, erhält man selbst mit dieser geringen Menge Additiv bei 25°C eine standfeste Paste mit etwas klebrigen Eigenschaften.

Beispiel 5

Im Gegensatz zu Beispiel 4 wird nun Stearylharnstoff (Schmelzpunkt 101°C) als <u>Mono</u>harnstoff zugesetzt, der also pro Molekül nur eine H-Brücken ausbildende Funktion enthält, indem 2 Gew.-% Stearylharnstoff bei 101°C im Siloxan-Urethan-Copolymer (Beispiel 1) gelöst werden. Trotzdem wird beim Abkühlen der öligen Lösung bei ca. 90°C eine steife, weiße Paste erhalten.

Beispiel 6

500 g eines $\alpha,\omega$-Bis(3,3-dimethyl-3-hydroxypropyl)-polydimethylsiloxans werden mit 44 g Hexamethylen-diisocyanat und 10 mg Dibutylzinndilaurat 3 Stunden lang auf 100°C erwärmt, wobei sich die Viskosität stark erhöht. Danach wird restliches Hexamethylen-diisocyanat mit Methanol bei 70°C während weiterer 3 Stunden abreagiert. Beim Abkühlen erfolgt bei ca. 60°C der Übergang von der homogenen Ölphase zur weichen, aber standfesten Paste, die noch überschüssiges Methanol enthält.

Beispiel 7

Beispiel 6 wird wiederholt mit der Abänderung, dass restliches Hexamethylen-diisocyanat mit 20 g n-Butanol während 3 Stunden bei 100°C umgesetzt wird, bis im IR-Spektrum kein Hexamethylendiisocyanat nachgewiesen werden kann. Beim Abkühlen erhält man ebenso bei ca. 60°C eine weiche Paste, die kein Lösemittel mehr enthält. Siloxancopolymer (1) und Verbindung (2) werden in einer Eintopfreaktion nacheinander erzeugt. Verbindung (2) muss also nicht erst als Reinstoff separat hergestellt werden.

Beispiel 8

In Abänderung zu Beispiel 6 werden nur 33 g Hexamethylendiisocyanat eingesetzt, also mit einem geringeren Diisocyanatüberschuss ein viskoseres, α,ω-Isocyanatosiloxan-Urethan-Copolymer erzeugt. Nach 3 Stunden bei 100°C gibt man weitere 11 g Hexamethylen-diisocyanat zu, gefolgt von 20 g n-Butanol. Die Bildung des Dibutyldiurethans sowie die Butoxylierung der Isocyanatokettenenden setzt sofort exotherm ein. Nach weiteren 3 Stunden wird abgekühlt, wobei bereits bei 72°C die Bildung einer weißen, steifen Paste erfolgt. Die Paste ist durch Erwärmen auf 80°C wieder in ein klares Öl überführbar und kann durch Abkühlen auf 72°C regeneriert werden.

Beispiel 9

Wie die Kettenlänge des eingesetzten Alkohols und damit die Struktur des Diurethans den Phasenübergangsbereich von Öl zur Paste beeinflusst, wird ersichtlich, wenn das Beispiel 7 statt mit 20 g n-Butanol mit 50 g 1-Dodecanol durchgeführt wird. Beim Abkühlen von 100°C entsteht bereits bei 95°C eine weiße, steife Paste.

Beispiel 10

Beispiel 6 wird wiederholt mit der Abänderung, dass das Reaktionsgemisch nach vollständiger Umsetzung des α,ω-Bis(3,3-dimethyl-3-hydroxypropyl)-polydimethylsiloxans statt mit Methanol mit 34 g n-Octylamin versetzt wird. Es erfolgt Temperaturerhöhung auf 120°C, wobei die Ölphase
mehr und mehr in pastenartige Konsistenz übergeht. Nach einer Stunde wird auf 25°C abgekühlt. Es entsteht eine sehr steife, farblose Paste.

Beispiel 11

Die Viskosität des in Beispiel 8 hergestellten α,ω-Isocyanatosiloxan-Urethan-Copolymers lässt sich durch Verringerung des Isocyanatüberschusses auf 29 g Hexamethylendiisocyanat weiter erhöhen. Nach 3 Stunden bei 100°C werden weitere 1,8 g Hexamethylendiisocyanat und danach 13,2 g n-Octylamin zudosiert. Es erfolgt exotherme Reaktion mit Temperaturanstieg auf 107°C mit Entstehen einer pastenartigen Konsistenz. Nach 1 Stunde bei 100°C wird abgekühlt. Man erhält eine weniger steife, farblose, fast transparente Paste.

## Patentansprüche

1. Pasten enthaltend

(1) Siloxancopolymere, die pro Molekül mindestens zwei Gruppen der allgemeinen Formel

$$-C(O)NR^1-$$

kovalent gebunden enthalten, bei 25°C flüssig sind und ein Molekulargewicht ($M_n$) von 500 bis 5 000 000 Dalton aufweisen,
wobei $R^1$ ein Wasserstoffatom oder einen Alkylrest mit 1 bis 18 Kohlenstoffatomen bedeutet und
(2) organische Verbindungen, die bei 25°C fest sind und ein Molekulargewicht ($M_n$) von bis zu 1 000 Dalton aufweisen und die in den Siloxancopolymeren (1) dispergiert sind und pro Molekül mindestens eine Gruppe enthalten, die zur Ausbildung von Wasserstoffbrücken mit den $-C(O)NR^1$-Gruppen in (1) als Donor und/oder Akzeptor wirkt.

2. Pasten nach Anspruch 1, **dadurch gekennzeichnet, dass** die organischen Verbindungen (2) in den Pasten in

Mengen von 0,02 bis 20 Gew.-%, bezogen auf das Gesamtgewicht von siloxancopolymeren (1) und organischen Verbindungen (2), enthalten sind.

**3.** Pasten nach Anspruche 1 oder 2, **dadurch gekennzeichnet, dass** die Siloxancopolymere (1) Siloxaneinheiten der allgemeinen Formel

$$R_aSiO_{\frac{4-a}{2}},$$

wobei R einen einwertigen Kohlenwasserstoffrest mit 1 bis 18 Kohlenstoffatomen je Rest bedeutet und
a 0, 1, 2 oder 3 ist,
enthalten.

**4.** Pasten nach Anspruch 1, 2 oder 3, **dadurch gekennzeichnet, dass** als Siloxancopolymere (1) solche eingesetzt werden, die Umsetzungsprodukte von endständige Si-C gebundenen Hydroxyl- oder Aminogruppen aufweisende Polydiorganosiloxane im Unterschuss mit Diisocyanaten,
wobei Urethan-Siloxan-Copolymere oder Harnstoff-Siloxan-Copolymere mit endständigen Si-C gebundenen Hydroxyl- oder Aminogruppen erhalten werden, sind.

**5.** Pasten nach Anspruch 1, 2 oder 3, **dadurch gekennzeichnet, dass** als Siloxancopolymere (1) solche eingesetzt werden, die Umsetzungsprodukte von endständige Si-C gebundenen Hydroxyl- oder Aminogruppen aufweisende Polydiorganosiloxane im Überschuss mit Diisocyanaten, wobei Urethan-Siloxan-Copolymere oder Harnstoff-Siloxan-Copolymere mit endständigen Si-C gebundenen Isocyanatogruppen erhalten werden, sind.

**6.** Pasten nach einem der Ansprüche 1 bis 5, **dadurch gekennzeichnet, dass** als organische Verbindungen (2) Diurethane oder Diharnstoffe eingesetzt werden.

**7.** Verfahren zur Herstellung der Pasten nach einem der Ansprüche 1 bis 6, indem eine Mischung enthaltend

(1) Siloxancopolymere, die pro Molekül mindestens zwei Gruppen der allgemeinen Formel

$$-C(O)NR^1-$$

kovalent gebunden enthalten, bei 25°C flüssig sind und ein Molekulargewicht ($M_n$) von 500 bis 5 000 000 Dalton aufweisen,
wobei $R^1$ ein Wasserstoffatom oder einen Alkylrest mit 1 bis 18 Kohlenstoffatomen und
(2) organische Verbindungen, die bei 25°C fest sind und ein Molekulargewicht ($M_n$) von bis zu 1 000 Dalton aufweisen und die pro Molekül mindestens eine Gruppe enthalten, die zur Ausbildung von Wasserstoffbrücken mit den $-C(O)NR^1$-Gruppen in den Sioxancopolymeren (1) als Donor und/oder Akzeptor wirkt,

so hoch erwärmt wird bis ein homogenes Öl erhalten wird und das so erhaltene Öl anschließend so tief abgekühlt wird bis eine Paste erhalten wird.

**8.** Verfahren nach Anspruch 7, **dadurch gekennzeichnet, dass** die organische Verbindung (2) zu dem erwärmten Siloxancopolymer (1) zugegeben wird, wobei die Temperatur des erwärmten Siloxancopolymers (1) über dem Schmelzpunkt der organischen Verbindung (2) liegt, und das erhaltene homogene Öl anschließend abgekühlt wird, wobei eine Paste erhalten wird.

**9.** Verfahren nach Anspruch 7, **dadurch gekennzeichnet, dass** die organische Verbindung (2) in situ in Gegenwart des erwärmten Siloxancopolymers (1) gebildet wird, wobei die Temperatur des erwärmten Siloxancopolymers (1) über dem Schmelzpunkt der in situ gebildeten organischen Verbindung (2) liegt, und das erhaltene homogene Öl anschließend abgekühlt wird, wobei eine Paste erhalten wird.

## Claims

**1.** Pastes comprising

(1) siloxane copolymers which contain at least two groups of the general formula

$$-C(O)NR^1-$$

in covalently bonded form per molecule, are liquid at 25°C and have a molecular weight ($M_n$) of from 500 to 5 000 000 daltons, where $R^1$ is a hydrogen atom or an alkyl radical having 1 to 18 carbon atoms and
(2) organic compounds which are solid at 25°C and have a molecular weight ($M_n$) of up to 1000 daltons, and which are dispersed in the siloxane copolymers (1) and contain, per molecule, at least one group which acts as donor and/or acceptor for the formation of hydrogen bridges with the $-C(O)NR^1$ groups in (1).

**2.** Pastes according to Claim 1, **characterized in that** the organic compounds (2) are present in the pastes in amounts of from 0.02 to 20% by weight, based on the total weight of siloxane copolymers (1) and organic compounds (2).

**3.** Pastes according to Claim 1 or 2, **characterized in that** the siloxane copolymers (1) contain siloxane units of the general formula

$$R_aSiO_{\frac{4-a}{2}},$$

where R is a monovalent hydrocarbon radical having 1 to 18 carbon atoms per radical and a is 0, 1, 2 or 3.

**4.** Pastes according to Claim 1,2, or 3, **characterized in that** the siloxane copolymers (1) used are those which are the reaction products of polydiorganosiloxanes having terminal Si-C bonded hydroxyl or amino groups in deficit with diisocyanates, where urethane-siloxane copolymers or urea-siloxane copolymers with terminal Si-C bonded hydroxyl or amino groups are obtained.

**5.** Pastes according to Claim 1,2, or 3, **characterized in that** the siloxane copolymers (1) used are those which are the reaction prducts of polydiorganosiloxanes having terminal Si-C bonded hydroxyl or amino groups in excess with diisocyanates, where urethane-siloxane copolymers or urea-siloxane copolymers with terminal Si-C bonded isocyanato groups are obtained.

**6.** Pastes according to one of Claims 1 to 5, **characterized in that** the organic compounds (2) used are diurethanes or diureas.

**7.** Process for the preparation of the pastes according to one of Claims 1 to 6, by heating a mixture comprising

(1) siloxane copolymers which contain at least two groups of the general formula

$$-C(O)NR^1-$$

in covalently bonded form per molecule, are liquid at 25°C and have a molecular weight ($M_n$) of from 500 to 5 000 000 daltons, where $R^1$ is a hydrogen atom or an alkyl radical having 1 to 18 carbon atoms and
(2) organic compounds are solid at 25°C and have a molecular weight ($M_n$) of up to 1000 daltons, and which contain, per molecule, at least one group which acts as donor and/or acceptor for the formation of hydrogen bridges with the $-C(O)NR^1$ groups in the siloxane copolymers (1),

until a homogeneous oil is obtained, and then cooling the resulting oil until a paste is obtained.

**8.** Process according to Claim 7, **characterized in that** the organic compound (2) is added to the heated siloxane copolymer (1), where the temperature of the heated siloxane copolymer (1) is above the melting point of the organic compound (2), and the resulting homogeneous oil is then cooled, giving a paste.

**9.** Process according to Claim 7, **characterized in that** the organic compound (2) is formed in situ in the presence of the heated siloxane copolymer (1),
where the temperature of the heated siloxane copolymer (1) is above the melting point of the organic compound (2) formed in situ, and the resulting homogeneous oil is then cooled, giving a paste.

## Revendications

**1.** Pâtes contenant

(1) des copolymères de siloxane, qui contiennent, avec fixation par liaison covalente, par molécule, au moins deux groupements de la formule générale

$$-C(O)NR^1-$$

qui sont liquides à la température de 25°C et qui présentent un poids moléculaire ($M_n$) de 500 à 5 000 000 Daltons,
$R^1$ désignant un atome d'hydrogène ou un radical alkyle ayant de 1 à 18 atomes de carbone et

(2) des composés organiques, qui sont solides à la température de 25°C et qui présentent un poids moléculaire ($M_n$) allant jusqu'à 1 000 Daltons et qui sont mis en dispersion dans les copolymères de siloxane (1) et qui contiennent par molécule au moins un groupement qui agit en tant que donneur et/ou accepteur en vue de la formation de ponts hydrogène avec les groupements $-C(O)NR^1-$ dans (1).

**2.** Pâtes selon la revendication 1, **caractérisées en ce que** les composés organiques (2) dans les pâtes sont contenus dans des quantités de 0,02 à 20% en poids, par rapport au poids total des copolymères de siloxane (1) et des composés organiques (2).

**3.** Pâtes selon la revendication 1 ou 2, **caractérisées en ce que** les copolymères siloxane (1) contiennent des unités de siloxane de la formule générale

$$R_aSiO_{\frac{4-a}{2}},$$

R désignant un radical hydrocarboné monovalent renfermant de 1 à 18 atomes de carbone par radical, et
a étant 0, 1, 2 ou 3.

**4.** Pâtes selon la revendication 1, 2 ou 3, **caractérisées en ce que** l'on utilise, en tant que copolymères de siloxane (1), des copolymères qui sont des produits de réaction de polydiorganosiloxanes présentant des groupements terminaux amino ou hydroxyle à liaison Si-C, présents en déficit, avec des diisocyanates, des copolymères uréthanne-siloxane ou urée-siloxane, ayant des groupements hydroxyle ou amino terminaux à liaison Si-C, étant obtenus.

**5.** Pâtes selon la revendication 1, 2 ou 3, **caractérisées en ce que** l'on utilise, en tant que copolymères de siloxane (1), des copolymères qui sont des produits de réaction de polydiorganosiloxanes présentant des groupements terminaux amino ou hydroxyle à liaison SiC, présents en excès, avec des diisocyanates, des copolymères uréthanne-siloxane ou urée-siloxane, ayant des groupements isocyanato terminaux, à liaison Si-C, étant obtenus.

**6.** Pâtes selon l'une quelconque des revendications 1 à 5, **caractérisées en ce que** l'on utilise, en tant que composés organiques (2), des diuréthannes ou des diurées.

**7.** Procédé en vue de la fabrication de pâtes selon l'une quelconque des revendications 1 à 6, exécuté en échauffant de manière à obtenir une huile homogène, un mélange contenant

(1) des copolymères de siloxane, qui contiennent, avec fixation par liaison covalente, par molécule, au moins deux groupements de la formule générale

$$-C(O)NR^1-$$

qui sont liquides à la température de 25°C et qui présentent un poids moléculaire ($M_n$) de 500 à 5 000 000 Daltons,
$R^1$ désignant un atome d'hydrogène ou un radical alkyle ayant de 1 à 18 atomes de carbone et

(2) des composés organiques, qui sont solides à la température de 25°C et qui présentent un poids moléculaire ($M_n$) allant jusqu'à 1 000 Daltons et qui contiennent, par molécule, au moins un groupement qui agit en tant que donneur et/ou accepteur en vue de la formation de ponts hydrogène avec les groupements $-C(O)NR^1-$ dans les copolymères de siloxane (1),

et en refroidissant ensuite l'huile ainsi obtenue de manière à obtenir une pâte.

**8.** Procédé selon la revendication 7, **caractérisé en ce que** le composé organique (2) est ajouté au copolymère de siloxane échauffé (1), la température du copolymère de siloxane échauffé (1) se situant au-dessus du point de fusion du composé organique (2) et l'huile homogène obtenue étant ensuite refroidie, à la suite de quoi l'on obtient une pâte.

**9.** Procédé selon la revendication 7, **caractérisé en ce que** le composé organique (2) est formé in situ en présence du copolymère de siloxane échauffé (1), la température du copolymère de siloxane échauffé (1) se situant au-dessus du point de fusion du composé organique formé in situ (2) et l'huile homogène obtenue étant ensuite refroidie, à la suite de quoi l'on obtient une pâte.